# EUROPÄISCHE PATENTSCHRIFT

(11) **EP 1 030 070 B1**
(45) Veröffentlichungstag und Bekanntmachung des Hinweises auf die Patenterteilung: **03.11.2004**
(21) Anmeldenummer: 00102022.1
(22) Anmeldetag: 02.02.2000
(51) Int. Cl.: F16B 21/08, H01L 23/485, G02B 6/42

(54) **Mikromechanische Kupplung sowie Verfahren zu deren Herstellung**
Micromechanical coupling and its manufacturing method
Couplage micromécanique et sa méthode de fabrication

(30) Priorität: 19.02.1999 DE 19907165
(43) Veröffentlichungstag der Anmeldung: 23.08.2000
(73) Patentinhaber: Micronas GmbH, 79108 Freiburg (DE)
(72) Erfinder: Igel, Günter, Dipl.-Ing., 79331 Teningen (DE); Gahle, Jürgen, Dr.-Ing., 79312 Emmendingen (DE); Lehmann, Mirko, Dipl.-Phys., 79106 Freiburg (DE)
(74) Vertreter: Patentanwälte Westphal, Mussgnug & Partner

(56) Entgegenhaltungen:
- US-A- 4 792 204
- US-A- 5 569 575
- PATENT ABSTRACTS OF JAPAN vol. 007, no. 002 (P-166), 7. Januar 1983 (1983-01-07) & JP 57 161819 A (YAMATAKE HONEYWELL KK), 5. Oktober 1982 (1982-10-05)

## Beschreibung

Die Erfindung betrifft eine mikromechanische Kupplung, mit einer Kupplungsaufnahme und einem Kupplungsgegenstück, das in Kupplungsstellung in einer Aufnahmevertiefung der Kupplungsaufnahme gehalten ist. Dei Erfindung bezieht sich außerdem auf ein Verfahren zur Herstellung einer solchen Kupplung.

Aus SMT Internationl Conference (1987), Steckverbinder für SMT, Produkte - Bereitstellung - Verarbeitung, Hubert A. Holzmann, Seite 222, kennt man bereits eine mikromechanische Kupplung der eingangs genannten Art, bei der als Kupplungsaufnahme eine Leiterplatte vorgesehen ist, die quer zu ihrer Plattenebene von einer Aufnahmevertiefung durchsetzt ist, in die ein angespitzer Einpreßstift als Kupplungsgegenstück eingesetzt ist. Das Kupplungsgegenstück bildet zusammen mit der Aufnahmevertiefung ein Preßpassung, die das Kupplungsgegenstück in der Kupplungsaufnahme reibschlüssig fixiert. Die vorbekannte Kupplung hat den Nachteil, daß die Preßpassung in der Kupplungsaufnahme mechanische Zugspannungen bewirkt, welche die mechanische Festigkeit der Kupplungsaufnahme mindern. Auch kann es im Bereich der Preßpassung zu einer Rißbildung in der Kupplungsaufnahme kommen.

Aus dem Buch "Mikromechanik" von Anton Heuberger, Springer-Verlag (1989), Seite 456 kennt man bereits eine Kupplung der eingangs genannten Art, bei der die Kupplungsaufnahme ein Halbleiterchip ist, der an einer seiner Flachseiten eine Vielzahl von V-förmigen Aufnahmevertiefungen aufweist, die jeweils entlang einer geraden Linie an der Oberfläche des Halbleiterchips verlaufen. In die V-förmigen Aufnahmevertiefungen ist jeweils in Verlaufsrichtung der Aufnahmevertiefung ein Endbereich eines faserförmigen optischen Leiters eingelegt. Die Kupplung ist als Transceiver-Array ausgebildet und weist einerseits Empfänger-Leiter auf, deren Enden benachbart zu auf dem Halbleiterchip befindlichen optischen Empfänger-Elementen angeordnet sind und andererseits weist die Kupplung Sende-Leiter auf, deren Enden benachbart zu auf dem Halbleiterchip befindlichen optischen Sende-Elementen angeordnet sind, die mit den Empfänger-Elementen über eine Verstärker- und Treibereinheit verbunden sind. Die vorbekannte Kupplung hat den Nachteil, daß die V-förmigen Aufnahmevertiefungen einen nicht unerheblichen Teil der Chip-Fläche des Halbleiterchips beanspruchen, der für die auf dem Halbleiterchip befindlichen optischen und elektronischen Bauelemente, wie beispielsweise die Verstärker- und Treibereinheit sowie die optischen Sende- und Empfängerelemente nicht genutzt werden kann. Die vorbekannte Kupplung weist deshalb einerseits noch vergleichsweise große Abmessungen auf und andererseits sind die Herstellungskosten für die Kupplung noch entsprechend hoch, da diese mit zunehmender Chip-Fläche überproportional ansteigen. Ungünstig ist außerdem, daß sich die V-förmigen Aufnahmevertiefungen nicht oder nur schlecht mit den in der Chip-Herstellung üblichen Standardprozessen in einen Wafer integrieren lassen. Ein weiterer Nachteil der Kupplung besteht darin, daß die optischen Leiter zwischen den Wandungen der V-förmigen Aufnahmevertiefungen eingeklemmt sind, um die Leiter in axialer Richtung in der Aufnahmevertiefung zu fixieren. Durch die dabei auf den Leiter ausgeübte Klemmkraft kann es zu mechanischen Spannungen in dem optischen Leiter kommen, welche die optischen Eigenschaften des Leiters verändern können.

Es besteht deshalb die Aufgabe, eine Kupplung der eingangs genannten Art zu schaffen, die einen kompakten Aufbau sowie eine mechanisch stabile Verbindung zwischen der Kupplungsaufnahme und dem Kupplungsgegenstück ermöglicht. Außerdem besteht die Aufgabe, ein Verfahren anzugeben, das eine einfache und kostengünstige Herstellung einer solchen Kupplung ermöglicht.

Die Lösung dieser Aufgabe besteht bezüglich der Kupplung darin, daß die Kupplungsaufnahme einen Schichtstapel mit wenigstens zwei Schichten aufweist, daß die Aufnahmevertiefung in dem Schichtstapel angeordnet ist und sich quer zu dessen Schichtungsebenen über mehr als eine Schicht erstreckt, daß die seitliche Begrenzungswand der Aufnahmevertiefung ausgehend von der an die Aufnahmevertiefung angrenzenden Oberfläche des Schichtstapels zum Inneren der Aufnahmevertiefung hin wenigstens einen Rücksprung aufweist, der durch eine gegenüber einer benachbarten Schicht zurückspringende Schicht oder einen zurückspringenden Schichtbereich gebildet ist, und daß das Kupplungsgegenstück seitlich wenigstens einen Führungs- und/oder Verriegelungsvorsprung hat, der in Kupplungsstellung in den Rücksprung des mikromechanischen Bauteils eingreift.

Das Kupplungsgegenstück ist also unter Vermeidung von Klemmkräften formschlüssig in der Aufnahmevertiefung fixiert, wodurch mechanische Spannungen in der Kupplungsaufnahme weitestgehend vermieden werden. Die Kupplung ermöglicht dadurch eine stabile Verbindung ihrer Kupplungsteile. Da sich die Aufnahmevertiefung quer zu den Schichtungsebenen des Schichtstapels erstreckt, beansprucht die Aufnahmevertiefung nur einen vergleichsweise kleinen Bereich der Oberfläche der Kupplungsaufnahme, was entsprechend kompakte Abmessungen der Kupplung ermöglicht. Bei einer als Halbleiter-Chip ausgebildeten Kupplungsaufnahme kann somit Chip-Fläche eingespart werden, was eine entsprechend kostengünstige Herstellung des Halbleiterchips ermöglicht. Die in dem Schichtstapel angeordnete Aufnahmevertiefung ermöglicht außerdem bei der Herstellung der Kupplung eine einfache, schichtweise Einbringung des Rücksprungs oder der Rücksprünge in die Begrenzungswand der Aufnahmevertiefung, wobei in der Mikromechanik und/oder der Halbleiterfertigung übliche Standardprozesse zur Anwendung kommen können.

Bei einer vorteilhaften Ausführungsform der Erfindung ist vorgesehen, daß wenigstens ein Rücksprung der Begrenzungswand zwischen zwei Schichten und/oder zwischen zwei quer zu den Schichtungsebenen zueinander versetzten Schichtbereichen des Schichtstapels angeordnet ist und daß wenigstens ein Führungs- und/oder Verriegelungsvorsprung des Kupplungsgegenstücks in Verriegelungsstellung in den zwischen diesen Schichten oder Schichtbereichen gebildeten Zwischenraum eingreift. Das Kupplungsgegenstück ist dann in seinen beiden Axialrichtungen, nämlich in Aufsteck- und in Abziehrichtung mittels des Führungs- und/oder Verriegelungsvorsprungs zwischen dem quer zu den Schichtungsebenen des Schichtstapels beidseits des Rücksprungs angeordneten, gegenüber dem Rücksprung vorspringenden Schichten und/oder Schichtbereichen der Begrenzungswand fixiert.

Eine beidseitige axiale Fixierung des Leiters an der Begrenzungswand der Aufnahme kann auch dadurch erreicht werden, daß wenigstens eine zwischen zwei Rücksprüngen angeordnete Schicht oder ein zwischen zwei Rücksprüngen angeordneter Schichtbereich an der Begrenzungswand einen Vorsprung bildet, und daß in Verriegelungsstellung der Kupplung quer zur Schichtungsebene dieser Schicht oder dieses Schichtbereichs beidseits dieser Schicht oder dieses Schichtbereichs jeweils wenigstens ein Führungs- und/oder Verriegelungsvorsprung des Kupplungsgegenstücks angeordnet ist. Bei dieser Ausführungsform der Erfindung greift also ein Vorsprung der Begrenzungswand in eine quer zu den Schichtungsebenen des Schichtstapels beidseits durch Führungs- und/oder Verriegelungsvorsprünge begrenzte Aufnahme des Kupplungsgegenstücks ein.

Bei einer Ausführungsform der Erfindung ist vorgesehen, daß die Begrenzungswand der Aufnahmevertiefung eine seitlich offene Schiebeführung für das Kupplungsgegenstück bildet und daß das Kupplungsgegenstück aus einer Vormontagestellung, in welcher der Führungs- und/oder Verriegelungsvorsprung außer Eingriff mit dem Rücksprung des mikromechanischen Bauteils ist, parallel zu den Schichtungsebenen des Schichtstapels, mit dem Führungs- und/oder Verriegelungsvorsprung in den Rücksprung der Begrenzungswand eingreifend, in die Verriegelungsstellung verschiebbar ist. Das Kupplungsgegenstück ist dann durch Aufstecken und Abziehen von der Schiebeführung lösbar mit dem mikromechanischen Bauteil verbindbar.

Bei einer besonders vorteilhaften Ausführungsform der Erfindung weist das Kupplungsgegenstück außenseitig mindestens ein federelastisches Element auf, das an seiner Außenseite wenigstens einen Rastvorsprung trägt, der in Gebrauchsstellung in den Rücksprung der Kupplungsaufnahme eingreift, wobei der Rastvorsprung in Kupplungsstellung der Kupplung gegen die Rückstellkraft des federelastischen Elements aus einer Verriegelungsstellung in eine Entriegelungsstellung auslenkbar ist. Dadurch ergibt sich eine als Rastverbindung ausgebildete Steckkupplung, die durch axiales Aufeinanderstecken oder voneinander Abziehen der Kupplungsteile ein einfaches und gegebenfalls lösbares Verbinden des Kupplungsgegenstück mit der Kupplungsaufnahme ermöglicht.

Bei einer besonders vorteilhaften Ausführungsform der Erfindung ist vorgesehen, daß das Kupplungsgegenstück als Anschlußkopf eines optischen und/oder elektrischen Leiters ausgebildet ist und daß die Kupplungsaufnahme wenigstens ein in der Aufnahmevertiefung angeordnetes oder daran angrenzendes elektrisch und/oder optisch leitfähiges Element aufweist, das in Kupplungsstellung der Kupplung mit dem optischen und/oder elektrischen Leiter in Leitverbindung steht. Der elektrische und/oder optische Leiter kann dabei quer zu den Schichtungsebenen der Schichtstapel-Schichten in die Aufnahmevertiefung eingesetzt sein. In vorteilhafter Weise wird dadurch für die Verbindung des Leiters mit der beispielsweise an einem mikromechanischen Bauteil befindlichen Kupplungsaufnahme nur ein vergleichsweise kleiner Bereich der Oberfläche des mikromechanischen Bauteils benötigt, so daß die Kupplung entsprechend kleine Abmessungen aufweisen kann. Bei einer Kupplungsaufnahme, die Teil eines Halbleiterchips ist, ergibt sich dadurch eine entsprechend geringe Chip-Fläche, was eine kostengünstige Fertigung des Halbleiterchips ermöglicht. Die in dem Schichtstapel angeordnete Aufnahmevertiefung ermöglicht bei der Herstellung der Kupplung eine einfache, schichtweise Einbringung des Rücksprungs in die Begrenzungswand der Aufnahmevertiefung, wobei in der Mikromechanik und/oder der Halbleiterfertigung übliche Standardprozesse zur Anwendung kommen können. Da der optische und/oder elektrische Leiter formschlüssig mit der Kupplungsaufnahme verbunden ist, kann der Leiter unter Vermeidung von Klemmkräften in der Aufnahmevertiefung fixiert sein. Mechanische Spannungen in dem Leiter, die bei einem optischen Leiter dessen optischen Eigenschaften beeinträchtigen können, werden dadurch vermieden. Erwähnt werden soll noch, daß die Aufnahmevertiefung einen Boden aufweisen kann, der in Einsetzstellung des Leiters als Anschlag für das den mikromechanischen Bauteil zugewandte stirnseitige Ende des Leiters dienen kann.

Vorteilhaft ist, wenn das den Rastvorsprung aufweisende federelastische Element als Federzunge und/oder als Ringmantelbereich des Anschlußkopfs ausgebildet ist. Eine in das Innere des Anschlußkopfes eingreifende elektrisch und/oder optisch leitfähige Seele des Leiters kann dann unter Beibehaltung ihres Querschnitts bis in das Innere der Aufnahmevertiefung und gegebenenfalls bis zu deren Boden geführt sein, wobei der Rastvorsprung und das federelastische Element außerhalb der Seele an dem Anschlußkopf angeordnet sind. Dabei werden mechanische Spannungen in der Seele des Leiters weitestgehend vermieden.

Eine bevorzugte, besonders vorteilhafte Ausführungsform der Erfindung sieht vor, daß das mit dem in die Aufnahmevertiefung eingreifenden Kupplungsgegenstück in Leitverbindung stehende elektrisch und/oder optisch leitfähige Element der Kupplungsaufnahme durch wenigstens eine an die Aufnahmevertiefung angrenzende elektrisch und/oder optisch leitfähige Schicht und/oder einen Schichtbereich des Schichtstapels gebildet ist und daß das Kupplungsgegenstück zumindest einen mit dem Leiter in Leitverbindung stehenden elektrisch und/oder optisch leitfähigen Bereich aufweist, der in Kupplungsstellung der Kupplung mit der elektrisch und/oder optisch leitfähige Schicht und/oder dem Schichtbereich des Schichtstapels elektrisch und/oder optisch leitend verbunden ist. Die Kupplungsaufnahme kann dann beispielsweise Teil eines mikromechanischen Bauteils, insbesondere eines Halbleiterchips sein. Die elektrisch und/oder optisch leitfähige Schicht und/oder der Schichtbereich des Schichtstapels kann dann mit elektrischen und/oder optischen Leiterbahnen des mikromechanischen Bauteils verbunden sein, die bei der Herstellung des Bauteils durch Maskieren der elektrisch und/oder optisch leitfähigen Schicht des Schichtstapels auf einfache Weise gefertigt werden können. Gegebenenfalls können sogar mehrere Schichten und/oder Schichtbereiche des Schichtstapels der Kupplungsaufnahme gleichzeitig elektrisch und/oder optisch leitend mit dem Leiter verbunden sein. Dadurch ergibt sich ein besonders niedriger elektrischer und/oder optischer Kontaktwiderstand zwischen der Kupplungsaufnahme und dem Leiter. Zweckmäßigerweise erfolgt die Leitverbindung über das federelastische Element des Kupplungsgegenstücks indem das federelastische Element durch die Rückstellkraft seines Werkstoffs in Gebrauchsstellung an eine elektrisch und/oder optisch leitfähige Schicht oder einen Schichtbereich angedrückt wird. Auch durch diese Maßnahme kann ein besonders geringer elektrischer und/oder optischer Kontaktwiderstand zwischen dem mikromechanischen Bauteil und dem Leiter erreicht werden. Die Andruckkraft kann aber auch dadurch erzeugt werden, daß der Schichtstapel ganz oder bereichsweise aus einem elastischen Material besteht und daß der in die Aufnahmevertiefung eingesetzte oder einzusetzende Endbereich des Leiters eine etwas größere lichte Weite aufweist als die Aufnahmevertiefung.

Bei einer besonders vorteilhaften Ausführungsform der Erfindung ist vorgesehen, daß das in Kupplungsstellung der Kupplung mit dem optischen und/oder elektrischen Leiter in Leitverbindung stehende elektrisch und/oder optisch leitfähige Element der Kupplungsaufnahme am Boden der Aufnahmevertiefung, dem stirnseitigen Ende des Leiters zugewandt angeordnet und insbesondere durch eine am Boden der Aufnahmevertiefung befindliche elektrisch und/oder optisch leitfähige Schicht gebildet ist. Dadurch kann bei einem optischen Leiter die optische Strahlung besonders gut zwischen der Kupplungsaufnahme und dem beispielsweise als optische Faser ausgebildeten Leiter übertragen werden. Am Boden der Aufnahmevertiefung kann dann gegebenenfalls ein optisches Sendeelement, zum Beiepiel eine Laserdiode, und/oder ein optisches Empfangselement, wie z.B. eine Photodiode oder ein Phototransistor angeordnet sein.

Bei einer besonders vorteilhaften Ausführungsform der Erfindung hat der Leiter eine optisch leitfähige Seele, die außenseitig eine metallische Umhüllung aufweist. Die Umhüllung dient dann einerseits als Reflektor zum Führen der optischen Strahlung in der optisch leitfähigen Seele und kann andererseits aber auch zur Übertragung elektrischer Signale genutzt werden. Dabei kann die Seele des in die Aufnahmevertiefung eingreifenden Leiters mit einem am Boden der Aufnahmevertiefung befindlichen optisch leitfähigen Element und die metallische Umhüllung des Leiters mit wenigstens einer seitlich an die Aufnahmevertiefung angrenzenden elektrisch leitfähigen Schicht oder einem Schichtbereich des Schichtstapels in Leitverbindung stehen. Somit ergibt sich eine kompakt aufgebaute Kupplung zur gleichzeitigen Übertragung von elektrischen und optischen Signalen.

Bei einer weiteren, vorteilhaften Ausführungsform der Erfindung ist das Kupplungsgegenstück ein Anschlußkopf einer Schlauch- oder Rohrleitung, wobei die Schlauch- oder Rohrleitung wenigstens einen Kanal für ein zu untersuchendes Medium aufweist, der mit einer an dem Kupplungsgegenstück befindlichen Öffnung verbunden ist, wobei die Öffnung des Kupplungsgegenstücks in Kupplungsstellung gegen die Kupplungsaufnahme abgedichtet ist und wobei am Boden der Aufnahmevertiefung der Kupplungsaufnahme im Bereich der Öffnung des Kupplungsgegenstücks wenigstens ein Sensor zum Untersuchen des in dem Kanal befindlichen Mediums angeordnet ist. Durch den Kanal kann dann beispielsweise ein chemisch agressives und/oder elektrisch leitfähiges Medium dem an der Kupplungsaufnahme befindlichen Sensor zugeführt werden. Die Kupplungsaufnahme und der Sensor können beispielsweise ein Teil eines Halbleiterchips oder eines mikromechanischen Bauteils sein. Durch die zwischen dem Kanal und der Kupplungsaufnahme befindliche Abdichtung wird das Medium nach außen hin abschirmt und insbesondere auch von Bereichen des Halbleiterchips oder des mikromechanischen Bauteils ferngehalten, an denen das Medium Korrosion verursachen und/oder die elektrische Funktion des Halbleiterchips oder des Bauteils beeinträchtigen könnte.

Bezüglich des Verfahrens zum Herstellen der erfindungsgemäßen Kupplung besteht die Lösung der vorstehend genannten Aufgabe darin, daß die Aufnahmevertiefung nach Fertigstellung des Schichtstapels in den Schichtstapel eingebracht wird. Es werden also zunächst die einzelnen Schichten und/oder Schichtbereiche zu einem Schichtstapel gestapelt und erst danach wird die Aufnahmevertiefung in die Schichten beziehungsweise Schichtbereiche eingebracht. Das Verfahren hat den Vorteil, daß es sich gut in den Fertigungsprozeß zur Herstellung eines die Kupplungsaufnahme bildenden Halbleiterchips, insbesondere eines CMOS-Chips integrieren läßt. Die bei der Herstellung des Schichtstapels beispielsweise auf eine Substratschicht aufgebrachten Schichtstapel-Schichten können nämlich zusätzlich auch für die Herstellung anderer in den Halbleiterchip zu integrierender Strukturen, wie beispielsweise Leiterbahnen, Transistoren oder optische Sende- und/oder Empfangselemente verwendet werden, indem diese Schichten in üblicher Weise maskiert werden, beispielsweise mittels photolithographischer Verfahren. Da die Aufnahmevertiefung erst nach Fertigstellung sämtlicher für den Schichtstapel benötigter Schichten in den Schichtstapel eingebracht wird, können die zur photolithographischen Herstellung der zusätzlichen Strukturen des Halbleiterchips benötigten Photolackschichten jeweils auf die einzelnen durchgängig aufgebrachten Schichten des Schichtstapels aufgetragen werden, bevor die Aufnahmevertiefung in den Schichtstapel eingebracht wird. Dadurch wird vermieden, daß die Aufnahmevertiefung die Ausbreitung des beispielsweise im Schleuderverfahren auf die Schichten aufgetragenen Photolacks an der Oberfläche der einzelnen Schichten behindert. Auch wird eine Rißbildung, die beim Auftragen einer Schicht auf eine Kante oder einen Absatz auftreten kann, durch das nachträgliche Einbringen der Aufnahmevertiefung in den Schichtstapel vermieden.

Vorteilhaft ist, wenn der Schichtstapel zum Einbringen der Aufnahmevertiefung mit einem Ätzmittel in Berührung gebracht wird und wenn die Schichtmaterialien der einzelnen Schichten und/oder Schichtbereiche des Schichtstapels zum Einformen eines Rücksprungs in die Begrenzungswand der Aufnahmevertiefung so ausgewählt werden, daß sie bezüglich des Ätzmittels unterschiedliche Ätzraten aufweisen. Die Begrenzungswand der Aufnahmevertiefung kann dann auf einfache Weise durch Unterätzen von Schichten und/oder Schichtbereichen des Schichtstapels hergestellt werden.

Nachfolgend sind Ausführungsbeispiele der Erfindung anhand der Zeichnung näher erläutert. Es zeigen:
- Fig. 1: einen Querschnitt durch eine Kupplung, die eine Kupplungsaufnahme und ein mit einem optischen Leiter verbundes Kupplungsgegenstück hat,
- Fig.2: eine Darstellung ähnlich wie Fig.1, wobei jedoch das Kupplungsgegenstück als Hülse ausgebildet ist, in die eine optisch leitfähige Seele des Leiters eingesetzt ist,
- Fig.3: eine Aufsicht auf die in Fig.2 gezeigte Kupplung, wobei der optische Leiter im Querschnitt dargestellt ist,
- Fig.4: eine Darstellung ähnlich Fig.3, wobei jedoch die Kupplungsaufnahme als seitlich offene Schiebeführung ausgebildet ist, und
- Fig.5: einen Querschnitt durch eine Kupplung, die eine Kupplungsaufnahme und ein mit einer Schlauch- oder Rohrleitung verbundes Kupplungsgegenstück hat.

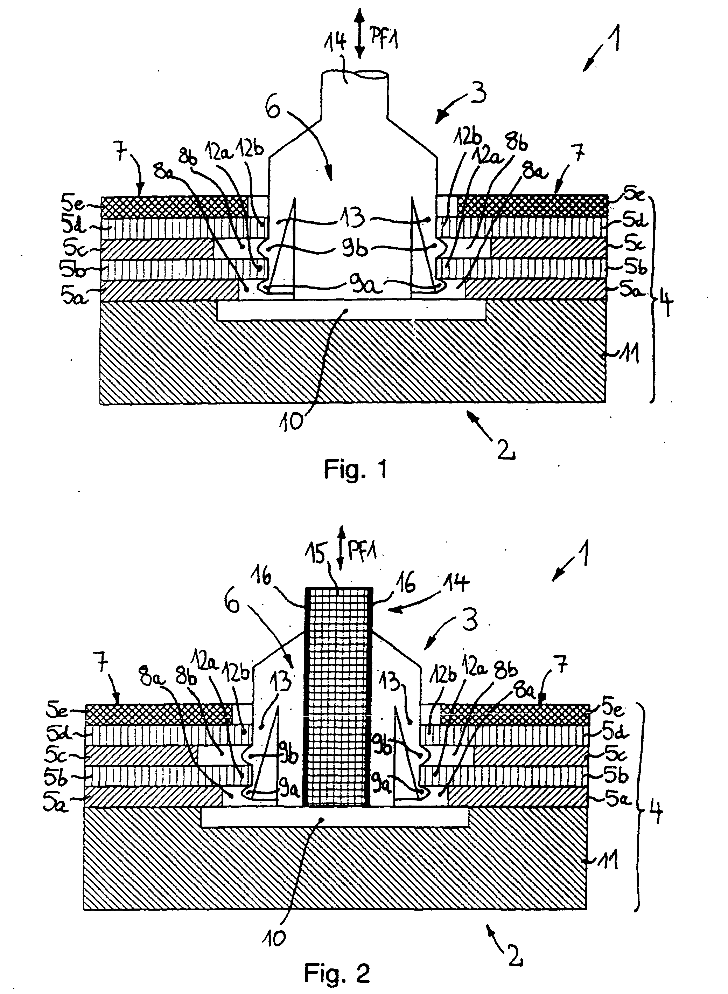

Eine in Figur 1 gezeigte, im ganzen mit 1 bezeichnete Kupplung weist eine als mikromechanisches Bauteil ausgebildete Kupplungsaufnahme 2 und ein damit verbundenes oder verbindbares Kupplungsgegenstück 3 auf. Das Kupplungsgegenstück 3 ist mit einem optischen Leiter 14 verbunden. Die Kupplungsaufnahme 2 hat einen Schichtstapel 4 mit mehreren Schichten 5a, 5b, 5c, 5d, 5e, in welchem eine Aufnahmevertiefung 6 angeordnet ist, die sich quer zu den Schichtungsebenen der Schichten 5a, 5b, 5c, 5d, 5e über mehrere Schichten 5a, 5b, 5c, 5d, 5e erstreckt.

Die seitliche Begrenzungswand der Aufnahmevertiefung 6 weist ausgehend von der an die Aufnahmevertiefung 6 angrenzenden Oberfläche 7 des Schichtstapels 4 zum Boden der Aufnahmevertiefung 6 hin mehrere Rücksprünge 8a, 8b auf, die jeweils durch eine gegenüber einer benachbarten Schicht 5b, 5d zurückspringende Schicht 5a, 5c gebildet sind.

Der Leiter 14 ist in Kupplungsstellung mit seinem der Kupplungsaufnahme 2 zugewandtem Endbereich quer und insbesondere orthogonal zu den Schichtungsebenen der Schichten 5a, 5b, 5c, 5d, 5e orientiert und greift mit dem Endbereich in die Aufnahmevertiefung 6 ein. Außenseitig weist der Leiter 14 mehrere seitlich vorstehende Führungs- und/oder Verriegelungsvorsprünge 9a, 9b auf, die in Kupplungsstellung jeweils in einen Rücksprung der seitlichen Begrenzungswand der Aufnahmevertiefung 6 des mikromechanischen Bauteils 2 eingreifen. Der Leiter 14 ist dadurch in Kupplungsstellung formschlüssig mit der Kupplungsaufnahme 2 verbunden.

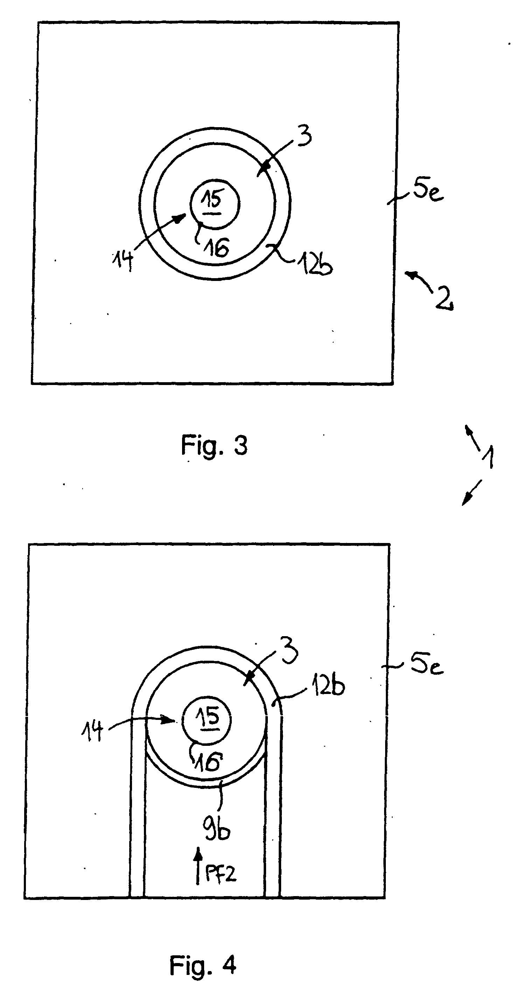

Das stirnseitige Ende des Leiters 14 ist in Kupplungsstellung einem am Boden der Aufnahmevertiefung 6 angeordneten optischen Sende- und/oder Empfangselement 10 zugewandt und steht mit diesem optisch in Leitungsverbindung, d.h. optische Signale, die an dem dem mikromechanischen Bauteil 2 abgewandten Ende in den Leiter 14 eingespeist werden, können zu dem Sende- und/oder Empfangselement 10 übertragen und eine von dem Sende- und/oder Empfangselement 10 abgestrahlte optische Strahlung kann in den optischen Leiter eingekoppelt werden. Wie aus Fig. 3 besonders gut erkennbar ist, wird zum Verbinden des Leiters 14 mit der Kupplungsaufnahme 2 nur eine vergleichsweise kleine Grundfläche der Kupplungsaufnahme 2, die beispielsweise an einem Halbleiterchip vorgesehen sein kann, benötigt.

Bei der Herstellung des mikromechanischen Bauteils 2 werden zunächst die einzelnen Schichten 5a, 5b, 5c, 5d, 5e des Schichtstapels 4 nacheinander auf eine Substratschicht 11 aufgebracht, beispielsweise durch Bedampfen, Sputtern, Galvanisieren oder dergleichen an sich bekannten Verfahren zum Erstellen einer Schicht. Nach Fertigstellung des Schichtstapels 4 wird auf die als Passivierungsschicht ausgebildete Schicht 5e eine ätzfeste Maske aufgetragen, die im Bereich der in den Schichtstapel 4 einzubringenden Aufnahmevertiefung 6 eine Unterbrechung oder eine Aussparung aufweist. Danach wird die der Substratschicht 11 abgewandte, die Maske aufweisende Oberfläche 7 des Schichtstapels 4 zum Einbringen der Aufnahmevertiefung 6 mit einem Ätzmittel in Berührung gebracht. Zum Einbringen der die Rücksprünge 8a, 8b und die dazu jeweils benachbarten Vorsprünge 12a, 12b aufweisenden Profilierung in die seitliche Begrenzungswand der Aufnahmevertiefung 6 weisen die einzelnen Schichten 5a, 5b, 5c, 5d, 5e des Schichtstapels 4 bezüglich des Ätzmittels unterschiedliche Ätzarten auf. Bei den Ausführungsbeispielen nach Fig. 1 und 2 haben beispielsweise die Schichten 5a, 5c, 5e eine größere Ätzrate als die Schichten 5b, 5d. Im Bereich der Schichten 5a, 5b ergibt sich dann durch Unterätzung der Rücksprung 8a, 8b. Da die Aufnahmevertiefung 6 erst nach Fertigstellung des Schichtstapels in diesen eingeätzt wird, läßt sich das Herstellungsverfahren für die Kupplungsaufnahme 2 gut in den Fertigungsprozeß einer Halbleiterfertigung integrieren. Die Kupplungsaufnahme 2 ist dadurch kostengünstig herstellbar. Die Aufnahmevertiefung 6 kann beispielsweise mittels Photolithographie mit hoher Maß- und Positionsgenauigkeit in den Schichtstapel 4 eingebracht werden. Der in die Aufnahmevertiefung 6 eingesetzte Endbereich des Leiters 14 ist somit in Kupplungsstellung exakt an dem optischen Sende- und/oder Empfangselement 10 positioniert.

Aus Fig. 1 ist erkennbar, daß die Rücksprünge 8a, 8b der Begrenzungswand zwischen zwei Schichten 11, 5b bzw. 5b, 5d des Schichtstapels 4 angeordnet sind. In den dadurch jeweils gebildeten Zwischenraum greift jeweils wenigstens ein Führungs- und/oder Verriegelungsvorsprung 9a, 9b des Leiters 14 ein. Der Leiter 14 ist dadurch sowohl in den beiden durch den Doppelpfeil Pf1 markierten Axialrichtungen, als auch der dazu in der Aufnahmevertiefung 6 fixiert.

In Fig. 1 ist weiter erkennbar, daß die Vorsprünge 12a, 12b jeweils durch eine zwischen zwei Rücksprüngen 5a, 5c beziehungsweise 5c, 5e angeordnete Schicht 5b, 5d gebildet sind. In Kupplungsstellung der Kupplung ist quer zur Schichtungsebene der Schicht 5b beidseits der Schicht 5b jeweils wenigstens ein Führungs- und/oder Verriegelungsvorsprung 9a, 9b des Leiters 14 angeordnet. Auch durch diese Maßnahme ist der Leiter 14 in den beiden durch den Doppelpfeil Pf1 markierten Richtungen in der Aufnahmevertiefung 6 fixiert.

Bei dem Ausführungsbeispiel gemäß Fig. 4 ist das Kupplungsgegenstück 3 als Anschlußkopf ausgebildet, der den Querschnitt des optisch leitfähigen Leiters 14 erweitert. Die Begrenzungswand der Aufnahmevertiefung 6 ist als seitlich offene Schiebeführung ausgebildet, in welche das Kupplungsgegenstück 3 aus einer Vormontagestellung, in der die Führungs- und/oder Verriegelungsvorsprünge 9a, 9b außer Eingriff mit den Rücksprüngen 8a, 8b der Kupplungsaufnahme 2 sind, parallel zu den Schichtungsebenen des Schichtstapels 4 in Richtung des Pfeils Pf 2 in eine Verriegelungsstellung verschiebbar ist, in der die Führungs- und/oder Verriegelungsvorsprünge 9a, 9b des Kupplungsgegenstücks 3 in die Rücksprünge 8a, 8b der Begrenzungswand eingreifen. Die Kupplungsteile sind also auf einfache Weise aufeinander aufsteckbar oder voneinander abziehbar.

Bei den Ausführungsbeispielen gemäß Fig.1 und 2 weist das Kupplungsgegenstück 3 an seinem Außenumfang mehrere als Ringmantelbereiche ausgebildete federelastische Elemente 13 auf, die an ihrer Außenseite jeweils als Rastvorsprünge ausgebildete Führungs- und/oder Verriegelungsvorsprünge 9a, 9b tragen. in Kupplungsstellung greifen die Führungs- und/oder Verriegelungsvorsprünge 9a, 9b jeweils in einen Rücksprung 8a, 8b der Begrenzungswand der Aufnahmevertiefung 6 ein. Zum Einsetzen und Herausziehen des Kupplungsgegenstücks 3 aus der Ausnahmevertiefung 6 sind die Führungs- und/oder Verriegelungsvorsprünge 9a, 9b jeweils gegen die Rückstellkraft des federelastischen Elements 13 quer zur Erstreckungsrichtung des Leiters 14 aus einer Verriegelungsstellung in der die Führungs- und/oder Verriegelungsvorsprünge 9a, 9b in die Rücksprünge 8a, 8b eingreifen, in eine Entriegelungsstellung auslenkbar, in der die Führungs- und/oder Verriegelungsvorsprünge 9a, 9b die Rücksprünge 8a, 8b freigeben. Die Kupplung 1 ist also als lösbare Steckkupplung ausgebildet und ermöglicht somit eine einfache Montage. In Fig.1 und 2 ist erkennbar, daß die Führungs- und/oder Verriegelungsvorsprünge 9a, 9b jeweils Einführschrägen und Abziehschrägen aufweisen, die das Aufeinanderstecken und/oder Abziehen der Kupplungsteile erleichtern. Erwähnt werden soll noch, daß die die federelastischen Elemente 13 bildenden Ringmantelbereiche durch Schlitze in Umfangsrichtung des Leiters 14 voneinander beabstandet sein können.

Bei dem Ausführungsbeispiel nach Fig.2 weist der Leiter 14 eine optisch leitfähige Seele 15 auf, die außenseitig von einer metallischen Umhüllung 16 umgeben ist. Die Umhüllung 16 ist elektrisch leitend mit dem aus einem elektrisch leitenden Material bestehenden und/oder eine elektrisch leitende Beschichtung aufweisenden Kupplungsgegenstück 3 verbunden. In Fig.2 ist erkennbar, daß das Kupplungsgegenstück 3 eine als Durchgangslochung ausgebildete Innenhöhlung aufweist, in welche die Seele 15 mit der metallischen Umhüllung eingesetzt ist. Dabei ist die Seele 15 mit ihrem stirnseitigen Ende dem am Boden der Aufnahmevertiefung 6 angeordneten optischen Sende- und/oder Empfangselement 10 zugewandt. An dem elektrisch leitend mit der metallischen Umhüllung 16 des Leiters 14 verbundenen Kupplungsgegenstück 3 greifen seitlich elektrisch leitfähige Schichtstapel-Schichten 5b, 5d der Kupplungsaufnahme 2 an. In Fig.2 ist erkennbar, daß die federelastischen Elemente 13 des Kupplungsgegenstücks 3 in Kupplungsstellung an der Begrenzungswand der Aufnahmevertiefung 6 jeweils gleichzeitig an den Schichten 5b, 5d angreifen und diese mit Federdruck beaufschlagen. Dadurch wird eine gut leitende elektrische Verbindung zwischen der metallischen Umhüllung 16 der Seele 15 und den elektrisch leitenden Schichten 5b, 5d erreicht. Insgesamt ergibt sich somit eine kompakt aufgebaute Kupplung 1, die sowohl eine elektrische, als auch eine optische Verbindung des Leiters 14 mit der Kupplungsaufnahme 2 ermöglicht.

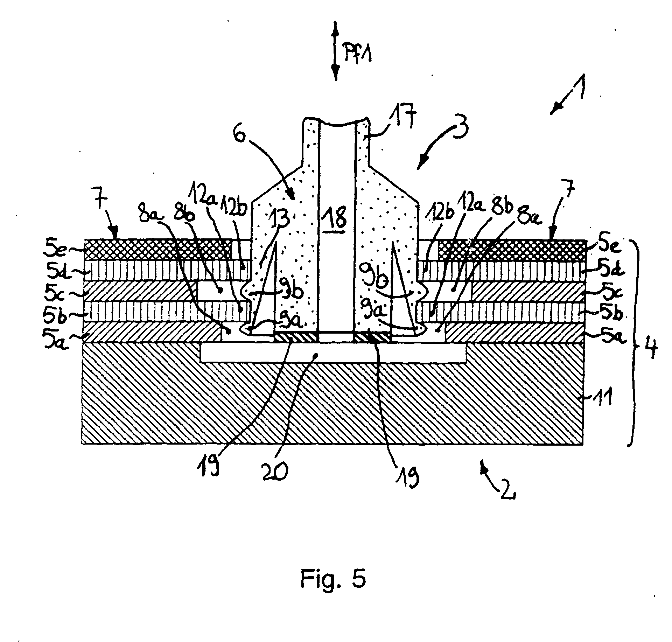

Auch bei dem Ausführungsbeispiel nach Figur 5 weist das Kupplungsgegenstück 3 an seinem Außenumfang mehrere als Ringmantelbereiche ausgebildete federelastische Elemente 13 auf, die an ihrer Außenseite jeweils als Rastvorsprünge ausgebildete Führungs- und/oder Verriegelungsvorsprünge 9a, 9b tragen, die in Kupplungsstellung jeweils in einen Rücksprung 8a, 8b der Begrenzungswand der Aufnahmevertiefung 6 eingreifen. Mit dem Kupplungsgegenstück 3 ist eine Schlauch- oder Rohrleitung 17 verbunden, die einen Kanal 18 aufweist, in den ein zu untersuchendes Medium eingefüllt oder einfüllbar ist. Der Kanal durchsetzt das Kupplungsgegenstück 3 und ist mit einer in Kupplungstellung dem Boden der Aufnahmevertiefung 6 zugewandten Öffnung des Kupplungsgegenstücks 3 verbunden. Die Öffnung wird von einem Dichtring 19 umgrenzt, der in Kupplungsstellung einerseits an dem Boden der Aufnahmevertiefung 6 und andererseits an dem dem Boden zugewandten Endbereich des Kupplungsgegenstücks 3 anliegt und die Öffnung gegen das Medium abdichtet. Am Boden der Aufnahmevertiefung 6 weist die Kupplungsaufnahme 2 einen Sensor 20 zum Untersuchen des Mediums auf, der mit seiner aktiven Sensorfläche innerhalb des Querschnitts der Öffnung des Kupplungsgegenstücks 3 angeordnet iat und dort an den Kanal 18 angrenzt. Die in Figur 5 gezeigte Meßvorrichtung eignet sich insbesondere zur Untersuchung chemisch agressiver und/oder elektrisch leitfähiger Medien, wobei diese durch das Kupplungsgegenstück 3 von den Schichten 5a, 5b, 5c, 5d, 5e des Schichtstapels 4 ferngehalten werden. Selbstverständlich kann die Schlauch- oder Rohrleitung 17 auch mehrere Kanäle 18 aufweisen, beispielsweise wenigstens einen Zuführ- und zumindest einen Abführkanal. Der Sensor 20 kann dann kontinuierlich oder diskontinuierlich mit dem zu untersuchenden Medium beströmt werden.

Zusammenfassend weist die Kupplung 1 also eine Kupplungsaufnahme 2 und ein damit verbindbares Kupplungsgegenstück 3 auf, das in Kupplungsstellung in einer Aufnahmevertiefung 6 der Kupplungsaufnahme gehalten ist. Die Aufnahmevertiefung 6 ist in einem Schichtstapel 4 mit wenigstens zwei Schichten 5a, 5b, 5c, 5d, 5e angeordnet. Die seitliche Begrenzungswand der Aufnahmevertiefung 6 weist, ausgehend von der an die Aufnahmevertiefung 6 angrenzenden flachseitigen Oberfläche 7 des Schichtstapels 4 zum Inneren der Aufnahmevertiefung 6 hin, wenigstens einen Rücksprung auf, der durch eine zurückspringende Schicht 5a, 5c oder einen zurückspringenden Schichtbereich gebildet ist. Das Kupplungsgegenstück 3 hat seitlich wenigstens einen Führungs- und/oder Verriegelungsvorsprung 9a, 9b, der in Kupplungsstellung in einen Rücksprung 8a, 8b des Bauteils 2 eingreift.

## Patentansprüche

1. Mikromechanische Kupplung (1), mit einer Kupplungsaufnahme (2) und einem Kupplungsgegenstück (3) , das in Kupplungsstellung in einer Aufnahmevertiefung (6) der Kupplungsaufnahme gehalten ist, **dadurch gekennzeichnet, daß** die Kupplungsaufnahme (2) einen Schichtstapel (4) mit wenigstens zwei Schichten (5a, 5b, 5c, 5d, 5e) aufweist, daß die Aufnahmevertiefung (6) in dem Schichtstapel (4) angeordnet ist und sich quer zu dessen Schichtungsebenen über mehr als eine Schicht (5a, 5b, 5c, 5d, 5e) erstreckt, daß die seitliche Begrenzungswand der Aufnahmevertiefung (6), ausgehend von der an die Aufnahmevertiefung (6) angrenzenden Oberfläche (7) des Schichtstapels (4) zum Inneren der Aufnahmevertiefung (6) hin wenigstens einen Rücksprung aufweist, der durch eine gegenüber einer benachbarten Schicht (5b, 5d) zurückspringende Schicht (5a, 5c) oder einen zurückspringenden Schichtbereich gebildet ist, und daß das Kupplungsgegenstück (3) seitlich wenigstens einen Führungs- und/oder verriegelungsvorsprung (9a,9b) hat, der in Kupplungsstellung in den Rücksprung (8a, 8b) des mikromechanischen Bauteils (2) eingreift.

2. Kupplung nach Anspruch 1, **dadurch gekennzeichnet, daß** wenigstens ein Rücksprung (8a, 8b)der Begrenzungswand zwischen zwei Schichten (11, 5b, 5d) und/oder zwischen zwei quer zu den Schichtungsebenen zueinander versetzten Schichtbereichen des Schichtstapels (4) angeordnet ist und daß wenigstens ein Führungs- und/oder Verriegelungsvorsprung (9a, 9b) des Kupplungsgegenstücks (3) in Verriegelungsstellung in den zwischen diesen Schichten (11, 5b, 5d) oder Schichtbereichen gebildeten Zwischenraum eingreift.

3. Kupplung nach Anspruch 1 oder 2, **dadurch gekennzeichnet, daß** wenigstens eine zwischen zwei Rücksprüngen (8a, 8b) angeordnete Schicht (5b, 5d) oder ein zwischen zwei Rücksprüngen (8a, 8b) angeordneter Schichtbereich an der Begrenzungswand einen Vorsprung (12a, 12b) bildet, und daß in Verriegelungsstellung der Kupplung (1) quer zur Schichtungsebene dieser Schicht (5b, 5d) oder dieses Schichtbereichs beidseits dieser Schicht (5b, 5d) oder dieses Schichtbereichs jeweils wenigstens ein Führungs- und/oder Verriegelungsvorsprung (9a, 9b) des Kupplungsgegenstücks (3) angeordnet ist.

4. Kupplung nach einem der Ansprüche 1 bis 3, **dadurch gekennzeichnet, daß** die Begrenzungswand der Aufnahmevertiefung (6) eine seitlich offene Schiebeführung für das Kupplungsgegenstück (3) bildet und daß das Kupplungsgegenstück (3) aus einer Vormontagestellung, in welcher der Führungs- und/oder Verriegelungsvorsprung (9a, 9b) außer Eingriff mit dem Rücksprung (8a, 8b) der Kupplungsaufnahme (2) ist, parallel zu den Schichtungsebenen des Schichtstapels (4), mit dem Führungs- und/oder Verriegelungsvorsprung (9a, 9b) in den Rücksprung (8a, 8b) der Begrenzungswand eingreifend, in die Verriegelungsstellung verschiebbar ist.

5. Kupplung nach einem der Ansprüche 1 bis 4, **Dadurch gekennzeichnet, daß** das Kupplungsgegenstück außenseitig mindestens ein federelastisches Element (13) aufweist, das an seiner Außenseite wenigstens einen Rastvorsprung trägt, der in Gebrauchsstellung in den Rücksprung (8a, 8b) der Kupplungsaufnahme (2) eingreift, und daß der Rastvorsprung in Kupplungsstellung der Kupplung (1) gegen die Rückstellkraft des federelastischen Elements (13) aus einer Verriegelungsstellung in eine Entriegelungsstellung auslenkbar ist.

6. Kupplung nach einem der Ansprüche 1 bis 5, **dadurch gekennzeichnet, daß** das Kupplungsgegenstück (3) als Anschlußkopf eines optischen und/oder elektrischen Leiters (14) ausgebildet ist, und daß die Kupplungsaufnahme (2) wenigstens ein in der Aufnahmevertiefung (6) angeordnetes oder daran angrenzendes elektrisch und/oder optisch leitfähiges Element aufweist, das in Kupplungsstellung der Kupplung (1) mit dem optischen und/oder elektrischen Leiter (14) in Leitverbindung steht.

7. Kupplung nach einem der Ansprüche 1 bis 6, **dadurch gekennzeichnet, daß** das den Rastvorsprung aufweisende federelastische Element (13) als Federzunge und/oder als Ringmantelbereich des Anschlußkopfs ausgebildet ist.

8. Kupplung nach einem der Ansprüche 1 bis 7, **dadurch gekennzeichnet, daß** das mit dem in die Aufnahmevertiefung (6) eingreifenden Kupplungsgegenstück (3) in Leitverbindung stehende elektrisch und/oder optisch leitfähige Element der Kupplungsaufnahme (2) durch wenigstens eine an die Aufnahmevertiefung (6) angrenzende elektrisch und/oder optisch leitfähige Schicht (5a, 5b, 5c, 5d, 5e) und/oder einen Schichtbereich des Schichtstapels (4) gebildet ist und daß das Kupplungsgegenstück (3) zumindest einen mit dem Leiter (14) in Leitverbindung stehenden elektrisch und/oder optisch leitfähigen Bereich aufweist, der in Kupplungsstellung der Kupplung (1) mit der elektrisch und/oder optisch leitfähige Schicht (5a, 5b, 5c, 5d, 5e) und/oder dem Schichtbereich des Schichtstapels (4) elektrisch und/oder optisch leitend verbunden ist.

9. Kupplung nach einem der Ansprüche 1 bis 8, **dadurch gekennzeichnet, daß** das in Kupplungsstellung der Kupplung (1) mit dem optischen und/oder elektrischen Leiter (14) in Leitverbindung stehende elektrisch und/oder optisch leitfähige Element der Kupplungsaufnahme (2) am Boden der Aufnahmevertiefung (6), dem stirnseitigen Ende des Leiters (14) zugewandt angeordnet und insbesondere durch eine am Boden der Aufnahmevertiefung (6) befindliche elektrisch und/oder optisch leitfähige Schicht gebildet ist.

10. Kupplung nach einem der Ansprüche 1 bis 9, **dadurch gekennzeichnet, daß** das am Boden der Aufnahmevertiefung (6) befindliche optisch leitfähige Element als optisches Sende- und/oder Empfangselement (10) ausgebildet ist.

11. Kupplung nach einem der Ansprüche 1 bis 10, **dadurch gekennzeichnet, daß** der Leiter (14) eine optisch leitfähige Seele (15) hat, die außenseitig eine metallische Umhüllung (16) aufweist.

12. Kupplung nach einem der Ansprüche 1 bis 11, **dadurch gekennzeichnet, daß** die Seele (15) des in die Aufnahmevertiefung (6) eingreifenden Leiters (14) mit einem am Boden der Aufnahmevertiefung (6) befindlichen optisch leitfähigen Element und die metallische Umhüllung (16) des Leiters (14) mit wenigstens einer seitlich an die Aufnahmevertiefung (6) angrenzenden elektrisch leitfähigen Schicht (5a, 5b, 5c, 5d, 5e) oder einem Schichtebreich des Schichtstapels (4) in Leitverbindung steht.

13. Kupplung nach einem der Ansprüche 1 bis 12, **dadurch gekennzeichnet, daß** das Kupplungsgegenstück (3) ein Anschlußkopf einer Schlauch- oder Rohrleitung (17) ist, daß die Schlauch- oder Rohrleitung (17) wenigstens einen Kanal (18) für ein zu untersuchendes Medium aufweist, der mit einer an dem Kupplungsgegenstück (3) befindlichen Öffnung verbunden ist, daß die Öffnung des Kupplungsgegenstücks (3) in Kupplungsstellung gegen die Kupplungsaufnahme (2) abgedichtet ist und daß am Boden der Aufnahmevertiefung (6) der Kupplungsaufnahme (2) im Bereich der Öffnung des Kupplungsgegenstücks (3) wenigstens ein Sensor (20) zum Untersuchen des Mediums in dem Kanal (18) befindlichen Mediums angeordnet ist.

14. Verfahren zum Herstellen einer Kupplung nach einem der Ansprüche 1 bis 13, **dadurch gekennzeichnet, daß** die Aufnahmevertiefung (6) nach Fertigstellung des Schichtstapels (4) in den Schichtstapel (4) eingebracht wird.

15. Verfahren nach Anspruch 14, **dadurch gekennzeichnet, daß** der Schichtstapel (4) zum Einbringen der Aufnahmevertiefung (6) mit einem Ätzmittel in Berührung gebracht wird und daß die Schichtmaterialien der einzelnen Schichten (5a, 5b, 5c, 5d, 5e) und/oder Schichtbereiche des Schichtstapels (4) zum Einformen eines Rücksprungs (8a, 8b) in die Begrenzungswand der Aufnahmevertiefung so ausgewählt werden, daß sie bezüglich des Ätzmittels unterschiedliche Ätzraten aufweisen.

## Claims

1. A micromechanical coupling (1), having a coupling receptacle (2) and a coupling counterpart (3), which in the coupling position is held in a receptacle depression (6) of the coupling receptacle,
**characterised in that** the coupling receptacle (2) comprises a layer stack (4) having at least two layers (5a, 5b, 5c, 5d, 5e),
**in that** the receptacle depression (6) is disposed in the layer stack (4) and extends transversely to its lamination planes over more than one layer (5a, 5b, 5c, 5d, 5e),
**in that** the lateral boundary wall of the receptacle depression (6), starting from the surface (7) of the layer stack (4) adjacent to the receptacle depression (6) towards the interior of the receptacle depression (6) comprises at least one return, which is formed by a layer (5a, 5c) that returns in relation to an adjacent layer (5b, 5d) or a returning layer region,
and **in that** the coupling counterpart (3) laterally has at least one guide and/or locking projection (9a, 9b), which in the coupling position engages in the return (8a, 8b) of the micromechanical component (2).

2. A coupling according to Claim 1,
**characterised in that** at least one return (8a, 8b) of the boundary wall is disposed between two layers (11, 5b, 5d) and/or between two layer regions of the layer stack (4) offset in relation to each other transversely to the layer planes, and **in that** at least one guide and/or locking projection (9a, 9b) of the coupling counterpart (3) engages in the space formed between these layers (11, 5b, 5d) or layer regions in the locking position.

3. A coupling according to Claim 1 or 2,
**characterised in that** at least one layer (5a, 5b) disposed between two returns (8a, 8b) or a layer region disposed between two returns (8a, 8b) forms a projection (12a, 12b) at the boundary wall,
and **in that** in the locking position of the coupling (1) transversely to the lamination plane of this layer (5b, 5d) or of this layer region, in each case at least one guide and/or locking projection (9a, 9b) of the coupling counterpart (3) is disposed on either side of this layer (5b, 5b) or of this layer region.

4. A coupling according to one of Claims 1 to 3,
**characterised in that** the boundary wall of the receptacle depression (6) forms a laterally open sliding guide for the coupling counterpart (3)
and **in that** the coupling counterpart (3) is displaceable parallel to the lamination planes of the layer stack (4) from a pre-assembly position, in which the guide and/or locking projection (9a, 9b) is out of engagement with the return (8a, 8b) of the coupling receptacle (2), into the locking position, with the guide and/or locking projection (9a, 9b) engaging in the return (8a, 8b) of the boundary wall.

5. A coupling according to one of Claims 1 to 4,
**characterised in that** the coupling counterpart comprises on its exterior at least one resilient element (13), which bears on its outer side at least one snap-in projection, which in the position of use engages into the return (8a, 8b) of the coupling receptacle (2),
and **in that** in the coupling position of the coupling (1) the snap-in projection can be thrust against the restoring force of the resilient element (13) out of a locked position into an unlocked position.

6. A coupling according to one of Claims 1 to 5,
**characterised in that** the coupling counterpart (3) is constructed as a connection head of an optical and/or electrical conductor (14),
and **in that** the coupling receptacle (2) comprises at least one electrically and/or optically conductive element that is disposed in the receptacle depression (6) or adjacent thereto and is in conductive connection with the optical and/or electrical conductor (15) in the coupling position of the coupling (1).

7. A coupling according to one of Claims 1 to 6,
**characterised in that** the resilient element (13) comprising the snap-in projection is constructed as a spring tongue and/or as an annular jacket region of the connection head.

8. A coupling according to one of Claims 1 to 7,
**characterised in that** the electrically and/or optically conductive element of the coupling receptacle (2) that is in conductive contact with the coupling counterpart (3) engaging in the receptacle depression (6) is formed by at least one electrically and/or optically conductive layer (5a, 5b, 5c, 5d, 5e) adjacent to the receptacle depression (6) and/or a layer region of the layer stack (4),
and **in that** the coupling counterpart (3) comprises at least one electrically and/or optically conductive region that is in conductive contact with the conductor (14) and in the coupling position of the coupling (1) is electrically and/or optically conductively connected to the electrically and/or optically conductive layer (5a, 5b, 5c, 5d, 5e) and/or the layer region of the layer stack (4).

9. A coupling according to one of Claims 1 to 8,
**characterised in that** the electrically and/or optically conductive element of the coupling receptacle (2) in conductive contact with the optical and/or electrical conductor (14) in the coupling position of the coupling (1) is disposed on the bottom of the receptacle depression (6), facing the front end of the conductor (6), and is formed in particular by an electrically and/or optically conductive layer situated on the bottom of the receptacle depression (6).

10. A coupling according to one of Claims 1 to 9,
**characterised in that** the optically conductive element situated on the bottom of the receptacle depression (6) is constructed as an optical transmitting and/or receiving element (10).

11. A coupling according to one of Claims 1 to 10,
**characterised in that** the conductor (14) has an optically conductive core (15) comprising a metallic sheath (16) on its exterior.

12. A coupling according to one of Claims 1 to 11,
**characterised in that** the core (15) of the conductor (14) engage into the receptacle depression (5) is in conductive contact with an optically conductive element situated on the bottom of the receptacle depression (6) and the metallic sheath (16) of the conductor (14) is in conductive contact with at least one electrically conductive layer (5a, 5b, 5c, 5d, 5e) laterally adjacent to the receptacle depression (6) or with a layer region of the layer stack (4).

13. A coupling according to one of Claims 1 to 12,
**characterised in that** the coupling counterpart (3) is a connection head of a tube or pipe conduit (17),
**in that** the tube or pipe conduit (17) comprises at least one channel (18) for a medium to be tested, which is connected to an opening situated on the coupling counterpart (3),
**in that** the opening of the coupling counterpart (3) is sealed against the coupling receptacle (2) in the coupling position
and **in that** at least one sensor (20) for testing the medium situated in the channel (18) is disposed on the bottom of the receptacle depression (6) of the coupling receptacle (2) in the region of the opening of the coupling counterpart (3).

14. A process for the manufacture of a coupling according to one of Claims 1 to 13,
**characterised in that** the receptacle depression (6) is inserted into the layer stack (4) after the completion of the layer stack (4).

15. A process according to Claim 14,
**characterised in that** the layer stack (4) is brought into contact with an etching medium for the insertion of the receptacle depression (6)
**and in that** the layer materials of the individual layers (5a, 5b, 5c, 5d, 5e) and/or layer regions of the layer stack (4) are selected to mould a return (8a, 8b) in the boundary wall of the receptacle depression so that they have different etching rates with respect to the etching agent.

## Revendications

1. Couplage micromécanique (1), comprenant un logement de couplage (2) et une contrepartie de couplage (3) qui est maintenue en position de couplage dans une cavité d'accueil (6) du logement de couplage,
**caractérisé en ce que**
- le logement de couplage (2) présente une pile de couches (4) comprenant au moins deux couches (5a, 5b, 5c, 5d, 5e),
- la cavité d'accueil (6) se trouve à l'intérieur de la pile de couches (4) et s'étend perpendiculairement au plan de ces couches sur plus d'une couche (5a, 5b, 5c, 5d, 5e),
- la paroi délimitante latérale de la cavité d'accueil (6), présente en partant de la face supérieure (7) de la pile de couches (4) et en allant vers l'intérieur, de la cavité (6) au moins une partie en retrait qui est formée par une couche (5a, 5c) en retrait par rapport à une couche voisine (5b, 5d), ou par une partie de couche en retrait, et
- la contrepartie de couplage (3) présente latéralement au moins une saillie (9a, 9b) de guidage et/ou de verrouillage qui est engagée dans la partie (8a, 8b) du composant micromécanique (2) en position de couplage.

2. Couplage selon la revendication 1,
**caractérisé en ce qu'**
au moins une partie en retrait (8a, 8b) de la paroi située entre deux couches (11, 5b, 5d) et/ou entre deux zones de couche de la pile de couches (4) est décalée transversalement aux plans des couches, et au moins une saillie (9a, 9b) de guidage et/ou de verrouillage appartenant à la contrepartie de couplage (3) est, en position de verrouillage, engagée dans l'intervalle existant entre ces deux couches (11, 5b, 5d) ou entre des zones de couche.

3. Couplage selon la revendication 1 ou 2,
**caractérisé en ce qu'**
- au moins une couche (5b, 5d) située entre deux parties en retrait (8a, 8b), ou une partie de couche située entre ces deux parties (8a, 8b) forme une saillie (12a, 12b), sur la paroi délimitante.
- en position de verrouillage du couplage (1), au moins une saillie (9a, 9b) de guidage et/ou de verrouillage appartenant à la contrepartie de couplage (3) est disposée transversalement au plan de cette couche (5a, 5b) ou de cette zone de couche, de part et d'autre de cette couche (5a, 5b) ou de cette zone de couche.

4. Couplage selon une des revendications 1 à 3,
**caractérisé en ce que**
- la paroi délimitante de la cavité d'accueil (6) forme un guidage, ouvert latéralement, pour la contrepartie de couplage (3),
- la contrepartie de couplage (3), partant d'une position de prémontage dans laquelle la saillie (9a, 9b) de guidage et/ou de verrouillage n'est pas en prise avec la partie en retrait (8a, 8b) du logement de couplage (2), peut coulisser parallèlement aux plans des couches de la pile de couches (4), pour venir en position de verrouillage où la saillie (9a, 9b) de guidage et/ou de verrouillage est engagée dans la partie en retrait (8a, 8b) de la paroi délimitante.

5. Couplage selon la revendication 1 à 4,
**caractérisé en ce que**
- la contrepartie de couplage présente extérieurement au moins un élément élastique (13) qui porte sur sa face externe au moins une saillie d'arrêt qui, en position d'utilisation, est engagée dans la partie en retrait (8a, 8b) du logement de couplage (2),
- en position active du couplage (1), la saillie d'arrêt peut, contre la force de rappel de l'élément élastique (13), passer d'une position de verrouillage à une position de déverrouillage.

6. Couplage selon une des revendications 1 à 5,
**caractérisé en ce que**
la contrepartie du couplage (1) est constituée par la tête de raccordement d'un conducteur optique et/ou électrique (14), et le logement de couplage (2) présente au moins un élément conducteur de l'électricité et/ou de la lumière, monté dans la cavité d'accueil (6) ou en bordure de celle-ci, cet élément étant en liaison conductrice avec le conducteur optique et/ou électrique (14) quand le couplage (1) est en position active.

7. Couplage selon une des revendications 1 à 6,
**caractérisé en ce que**
l'élément élastique (13) présentant la saillie d'arrêt est constitué par une languette élastique et/ou par une zone de l'enveloppe annulaire de la tête de raccordement.

8. Couplage selon une des revendications 1 à 7,
**caractérisé en ce que**
- l'élément conducteur électrique et/ou optique du logement de couplage (2) qui est en relation conductrice avec la contrepartie de couplage engagée dans la cavité d'accueil (6) est constitué par au moins une couche (5a, 5b, 5c, 5d, 5e) et/ou une zone d'une couche de la pile de couches (14) située en limite de la cavité d'accueil (6),
- la contrepartie de couplage (3) présente au moins une zone conductrice de l'électricité et/ou de la lumière qui est en relation conductrice avec le conducteur (14) et qui, en position active du couplage (1), est en liaison conductrice électriquement et/ou optiquement avec la couche (5a, 5b, 5c, 5d, 5e) et/ou la zone d'une couche de la pile de couches (4) qui est conductrice électriquement et/ou optiquement.

9. Couplage selon une des revendications 1 à 8,
**caractérisé en ce que**
l'élément du logement de couplage (2), qui, quand le couplage (1) est en position active, est en liaison conductrice électrique et/ou optique avec le conducteur optique et/ou électrique (14), est disposé sur le fond de la cavité d'accueil (6), en regard de l'extrémité frontale du conducteur (14), et il est notamment constitué par une couche conductrice électriquement et/ou optiquement qui se trouve sur le fond de la cavité d'accueil (6).

10. Couplage selon une des revendications 1 à 9,
**caractérisé en ce que**
l'élément conducteur optique qui se trouve sur le fond de la cavité d'accueil (6) est un élément optique d'émission et/ou de réception (10).

11. Couplage selon une des revendications 1 à 10,
**caractérisé en ce que**
le conducteur (14) comprend une âme (15) conductrice de la lumière, entourée extérieurement par une enveloppe métallique (16).

12. Couplage selon une des revendications 1 à 11,
**caractérisé en ce que**
l'âme (15) du conducteur (14) engagée dans la cavité d'accueil (6) est reliée à un élément conducteur de la lumière se trouvant sur le fond de la cavité d'accueil (6), tandis que l'enveloppe métallique (16) du conducteur (14) est en liaison conductrice avec au moins une couche (5a, 5b, 5c, 5d, 5e) ou une zone de couche de la pile de couches (4) qui est conductrice de l'électricité et située en limite latérale de la cavité d'accueil (6).

13. Couplage selon la revendication 1 à 12,
**caractérisé en ce que**
- la contrepartie de couplage (3) est une tête de raccordement d'une conduite (17) en forme de tube ou de tuyau, qui comprend au moins un canal (18) pour un fluide à examiner, qui est relié à une ouverture de la contrepartie de couplage (3),
- cette ouverture, en position de couplage, est rendue étanche par rapport à la cavité de couplage (2) et sur le fond de la cavité d'accueil (6) du logement de couplage (2) se trouve, dans la zone de l'ouverture de la contrepartie (3) au moins un capteur (10) pour examiner le fluide qui se trouve dans le canal (18).

14. Procédé de fabrication d'un couplage selon une des revendications 1 à 13,
**caractérisé en ce que** la cavité d'accueil (6) est introduite dans la pile de couches (4) après fabrication de celle-ci.

15. Procédé de fabrication d'un couplage selon la revendication 14,
**caractérisé en ce que**
la pile de couches (4), pour réaliser la cavité d'accueil (6), est mise en contact avec un agent de gravure et les matériaux constituant les couches individuelles (5a, 5b, 5c, 5d, 5e) et/ou des zones de couche de la pile de couches (4), destinées à la réalisation d'une partie en retrait (8a, 8b) dans la paroi délimitante de la cavité d'accueil, sont choisies de manière qu'elles présentent des taux de gravure différents par rapport à l'agent de gravure.
